# EUROPEAN PATENT APPLICATION

(11) **EP 1 170 920 A1**
(43) Date of publication of application: **09.01.2002**
(21) Application number: 00305716.3
(22) Date of filing: 06.07.2000
(51) Int. Cl.: H04L 29/06

(54) **Location dependant service access**

(71) Applicant: BRITISH TELECOMMUNICATIONS public limited company, London EC1A 7AJ (GB)
(72) Inventor: Minnis, Stephen, Ipswich, IP4 5QD (GB); Kadirire, James, Cambridge, CB1 3BS (GB)
(74) Representative: Lidbetter, Timothy Guy Edwin

(57) **Abstract**

Access to a distributed computer system 17, 171, 172 is achieved from a mobile terminal 11. The location or other characteristics of the terminal 11 are identified and communicated to a co-operating access control server 13. A store 15 holds details of location-based servers 16, 161, 162, which in turn have details of local computer equipment 17, 171, 172. The access control server 13 identifies a suitable location-based server 16 and provides access to the location based server so that the terminal 11 can identify the individual items of computer equipment 17, 171, 172 available. The invention allows a mobile terminal 11 to make use of location-based facilities 17 by forming a connection with the local distributed computer system 16, 17, 171, 172. Examples include access from the mobile unit to fixed equipment such as printers, or location based services such as airport check-in services.

## Description

This invention relates to the control of access to elements of a distributed computer system.

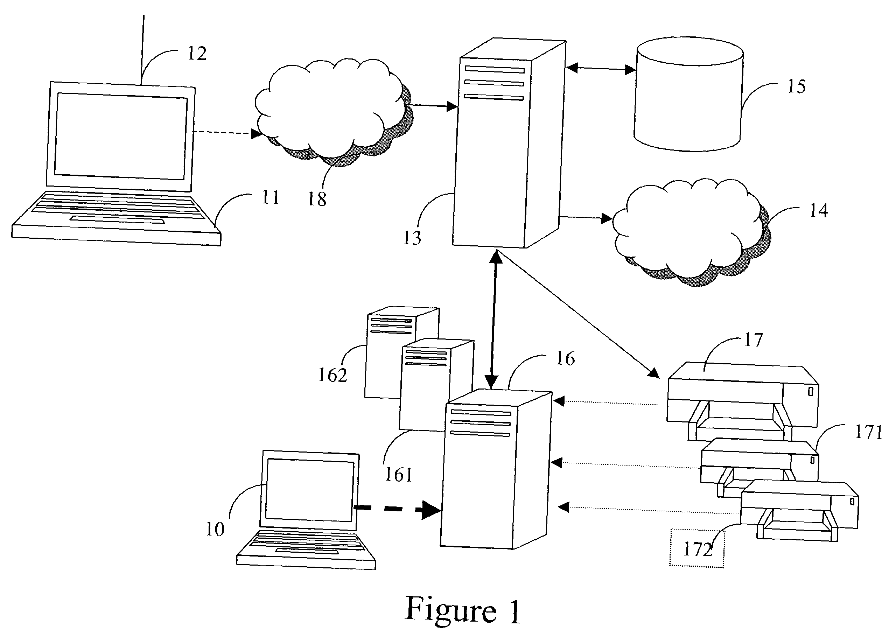

Distributed computing systems provide a group of computer apparatus, (for example 17, 171, 172 in Figure 1) such as laptop terminals, printers, databases, etc, which can interact with each other as required, rather than being permanently connected, either directly or through a common "server". They typically interact through a look-up server (16) which stores the identities (network addresses) of the elements forming the system. When it is connected to the network, the apparatus sends out a multicast call to "discover" the nearest lookup server - that is, any serving local area networks (LANs) to which the apparatus is connected, and causes itself to be registered with any lookup server that responds.

Advantages of such systems include the ability to interoperate apparatus with the minimum of access control protocols for the user to perform, and their resilience to component failure, because even if parts of the network, or individual terminals or services fail, other parts continue to operate. Initial disadvantages of distributed computing architectures were network response times, particularly if interoperation outside a local network was required, and complexity of development, though this has been addressed by more recent standard interfaces such as the one developed by Sun Microsystems known as "JINI", which uses the JAVA programming language.

For such systems to operate it is necessary to define in advance the apparatus which are to co-operate. In particular, a terminal (10) forming part of the system must be provided with the means to access the look up server, and must therefore be recognisable to it. However, there are circumstances when it would be convenient for a given apparatus to be made a temporary member of such a group. In particular, a user of a mobile terminal (such as a Personal Digital Assistant: a portable computer terminal with communications capability) may require use of computer entities specific to his current location.

According to the present invention there is provided a method of providing access to a distributed computer system from a terminal, comprising the steps of identifying one or more characteristics of the terminal, selecting a distributed computer system having the terminal characteristics so identified, and providing access to the server of the distributed computer system so identified. This process is preferably performed by the access control server with which the terminal communicates, the access control server being part of the distributed system and therefore capable of connection to the selected apparatus. In a preferred embodiment, the characteristic is the location of the terminal. The location may be identified by an automatic position-finding process. Alternatively location may be identified by user entry of details by a keypad. Access may be provided by retrieval from a store of an address for a distributed computer system, or a selected element thereof, having the required characteristic.

An embodiment of the invention will now be described, with reference to the drawings, in which
Figure 1 illustrates the general arrangement of the components participating in the service.
Figure 2 illustrates the service identification phase
Figure 3 illustrates the operation of the service selection and interaction phase

The embodiment to be described in detail is a printer service which allows a user access to identify a printing apparatus available in his vicinity, and then make use of it through his PDA. However, as will be described, many other services may be provided in the same way.

The embodiment illustrated in Figure 1 allows a user with a standard Personal Digital Assistant ("PDA") 11 - essentially a laptop computer with access to a cellular communications network 18 - to access the functionality of a local service 17 identified as appropriate to a location specified by the user himself, or determined automatically by his PDA 11. The interface may be in any suitable protocol, the one illustrated being configured for HTTP Protocol.

The user's mobile unit 11 has a means 12 for determining its geographical location. This may take one of many forms, as will be described later. The mobile unit 11 is in communication through the communications network 18 with an access control server 13, through which it may access a network of computers, typically various LANs within a company such as the "Intranet" 14 (and also the internet). The access control server 13 also has access to a database 15 which stores access address data for a number of location-based look-up servers 16, 161, 162 etc, in conjunction wiith geographical location data for each one. Each such location-based server (16 for example) stores details such as the identities, interface requirements and current status (in service, busy, not available etc) of services 17, 171, 172 available at its respective location, and the address by which each such device or service may be accessed through the distributed computer system 14. In the "JINI" system previously referred to, a service (17, 171,172), when connected to the network, sends out multicast calls to "discover" the nearest lookup server 16. It then registers itself on the server 16 as being available.

The access control server 13 is able to connect to the lookup server 16 of a local LAN to find out the printer services 17, 171, 172 that have been registered with that lookup server 16. The access control server 13 does not have to be part of that LAN itself, but does form part of the distributed system and runs servlets which communicate with the other members 16, 17, 171, 172 of the distributed system. The access control server 13 does not necessarily need to be recognised by the other parts of the system. It acts as a client in an agent based system: the access control server 13 needs to be aware of and control the services 17, 171, 172, and the lookup server 16, and in some applications (in particular the look up server 16) to retrieve data from them. However, the access control server 13 does not itself need to be accessed from the services 17, 171, 172 or the lookup server 16 except in response to a specific request from the access control server 13. In contrast to the prior art arrangement, in which each PDA 10 must be a pre-existing member of the distributed system, with a suitable access means to the look-up server, in the present invention only the access control server 13 needs to have this capability.

The process of accessing a local service 17 from a mobile device 11 involves the user performing three principal steps: Identification of Location, Selection of Local Services, and Interaction with Local Services

Identification of the location of the user 11 may be automatic. The satellite-based Global Positioning System could be used, but is unreliable inside buildings, and requires the user terminal to have a GPS receiver.

A position-finding system based on the cellular telephone network such as that disclosed in the present applicant company's International Patent Specification WO96/35306, may be used. This measures the position of the mobile unit relative to the network of local radio base stations, by measuring the difference in arrival times of signals transmitted synchronously by the base stations. In this arrangement the position-finding process may be carried out by the network, and in particular by the access control server 13

The "ad hoc" piconet system being developed by a consortium led by Ericsson and known as "Bluetooth" is another possibility. This system allows devices equipped with a suitable "Bluetooth" transceiver to establish localised networks of co-operating devices. A mobile user terminal equipped with such a transceiver would automatically become part of any localised network within whose range it moves. One of the devices at a given location may act as a beacon to identify its location, and consequently the approximate location of other devices in communication with it: this may be an ancillary function of a device provided for another primary purpose, or it may be provided by a dedicated device. The latter arrangement is preferred since it avoids the possibility of the host device being removed for repair or replacement.

Alternatively, the user may select the location from a form-based Web page, using his own knowledge as to his wherabouts, and enter his position manually.

Once the user's current location has been identified, by any of the means described above, the services required are identified. This again may be done by manual input by the user, or may be done automatically as a result of previous user activity. In manual mode the user may select a function, for example "Find Printers". In each case the access control server will retrieve from the local server a list of local printers nearest the user's location. The user may now select a printer to use. Although in the example data is transferred only in one direction; from user to printer, the invention may be used to transfer data in either direction for example instead of printing a file from a PDA using a local printer, the invention can be used to copy or display locally stored files on the user terminal.

In detail, the service identification and interaction processes operate as follows.

The first part of the process concerns the initial query - i.e given a location, (specified by one of the means described above) the services available are to be identified.

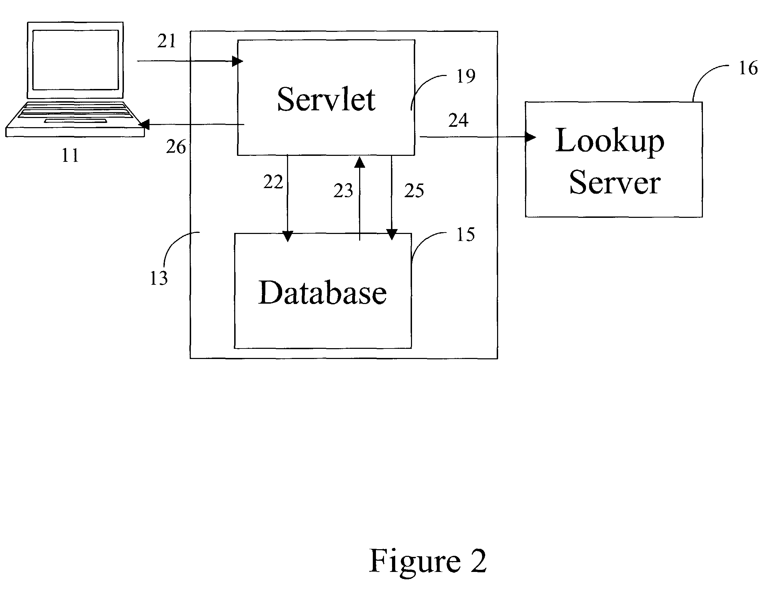

This query is passed to the access control server 13 using standard HTTP CGI (Common Gateway Interface) technology. In this embodiement the access control server 13 runs Java Server Pages technology in the form of a "servlet" 19 (a standard Sun Microsystems web server-side technology) to process the queries and interface with JINI. The steps involved in this process are shown in Figure 2. Firstly the user transmits a "Request for Local Services" (step 21) to its access control server 13. The servlet 19 in the access control server 13 sends a query to the. database 15 for the nearest lookup server at the specified location (step 22). The database 15 returns a list of lookup servers 16, 161, 162 at the requested location (step 23). The servlet 19 then contacts the lookup server 16 identified as being the most appropriate, to obtain a list of local services 17, 171, 172 (step 24). This list may be stored in the database 15 to implement a form of caching (step 25) or it may be incorporated in the HTML message as a "cookie", that is a small programme for operation of the user terminal. The list is transmitted to the user terminal 11 as a HTML (hypertext markup language) message (step 26).

The next part of the process concerns identification of the "interface" between the user terminal 11 and the service 17 to be used, which requires definition to allow interoperability. The interface definition files may be stored in a repository associated with each server 16, 161, 162, which the user terminal 11 can access to retrieve the interface data it requires. They may instead be retrieved from the look up server and stored in the database 15 with the list itself. In a simpler system, services compatible with the system may be arranged to all have a standard interface, or set of functions, making these steps unnecessary. For example all printer services would implement the following interfaces, using the same definitions and operating protocols:
- landscape/portrait selection
- black and white/colour selection
- number of copies.

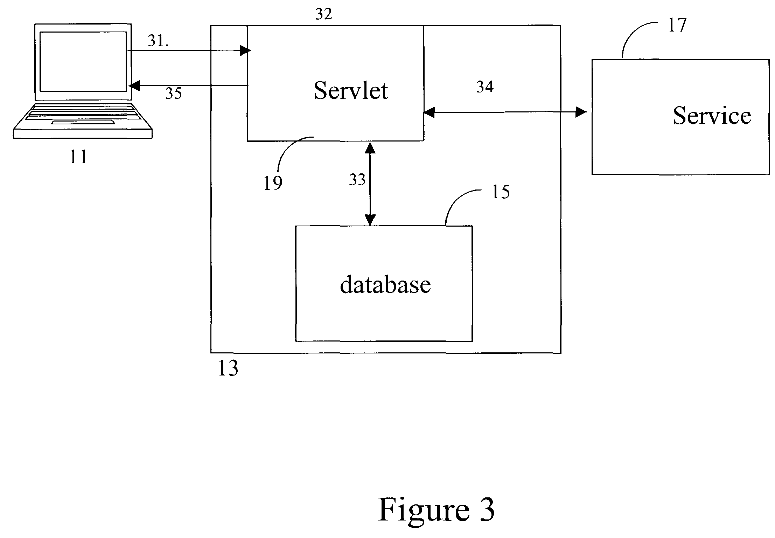

The next part of the process, shown in Figure 3, is the local service interaction phase. The user terminal 11 transmits an instruction to the access control server 13 to call the required service 17 from within the servlet 19. The necessary interface parameters are also transmitted, either automatically or by the user in response to a prompt. Firstly a request is made to the servlet 19 for a specific Local Service 17, selected from the list (step 31), including any parameters required. These are checked by the servlet 19 (step 32), and if necessary prompts are transmitted to the user for re-entry of the data, or entry of further user selections. The address details of the requested service 17 are next extracted from the database 15 (step 33), or run as cookies in the server if they have previously been stored there in this form. The requested service unit 17 (the printer in the present example) is then called with the required parameters (step 34), and a job status is returned to the user terminal 11 (e.g. "print job submitted") (step 35).

This arrangement has several useful features. Firstly, the system is independent of the specific devices available, since the interface is handled through the network. Secure managed access is possible. Different interfaces can be used, using the service control unit 13 to provide a standard "look and feel" to the user.

The invention has several applications beyond the simple printer service application outlined above. Further examples will now be described, with reference to the same figures.

A localised select/payment system may be provided, in which a user in a restaurant either logs onto a restaurant website 17 using his own PDA 11, or is given a restaurant PDA already connected to the system. The PDA 11 is used to access local information, such as the menu (which may include multimedia menu presentation, including ingredients etc), and then call for a waiter, or alternatively order the meal using an on-line order system. Further dishes/courses etc can be ordered when ready. Finally the user can opt to pay the bill automatically via a payment system server 171 (which has a standard interface) connected to the restaurant's EFTPOS (electronic funds transfer at point of sale) system. This allows the user to view a multimedia menu on a non-obtrusive device. The restaurant chain can implement the same secure system at each branch, but customise local branch menus, prices and so on. Other services, such as a printer service 17 to print the bill or make a copy of the menu, or a taxi ordering service 172, can be readily added. Other select/payment systems can be envisioned for other scenarios, such as train ticket ordering.

Another potential application is for localised secure service access. A subscriber to an airport's system, on entering the airport, may connect his handset11 over the network 18 to the airport's system 16, and select a check-in service 171. This displays a list of airlines that have subscribed to the scheme, and the local flights departures. The user selects the airline and flight, enters a pre-defined (secure) code, and is automatically checked in. The user may be able to select a specific seat, and specify in-flight meals, and obtain details for luggage check-in. Other services which might be added include last-minute ticket finding, and accommodation and transport services for arriving passengers, as well as multimedia information on the local airport.

Another application of the system is as a localised information service, provided in a specified environment such as a train. From the train's own data network a user can request information on the journey time, buffet car prices and menu. If security controls are used, items could be ordered/purchased.

## Claims

1. A method of providing access to a server of a distributed computer system from a terminal, comprising the steps of identifying one or more characteristics of the terminal, selecting a distributed computer system suitable for operation with a terminal having the characteristics so identified, and providing access to the distributed computer system so identified.

2. A method according to claim 1, wherein the terminal co-operates with an access control server, the access control server being part of the distributed system and therefore capable of connection to the selected apparatus.

3. A method according to claim 1 or claim 2, in which the characteristic identified is the location of the terminal.

4. A method according to claim 3, in which the location is identified by an automatic position-finding process.

5. A method according to any preceding claim, in which access is provided by retrieval from a store of an address for a distributed computer system, or a selected element thereof, having the required characteristic.

6. An access control server for enabling access by an associated terminal apparatus to a distributed computer system, the access control server having means for communication with at least one or more terminals, means for receiving data from the terminal identifying one or more characteristics of the terminal, means for selecting a distributed computer system suitabel for co-operation with a terminal having the characteristics so identified, and means for providing access to the distributed computer system so identified.

7. Apparatus according to claim 6, wherein the access control server has means for identifying the location of the terminal.

8. Apparatus according to claim 6 or 7, wherein the access control server has a storage means for storing addresses for distributed computer systems, or a selected elements thereof, having given characteristics, for retreival .
